# EUROPEAN PATENT SPECIFICATION

(11) **EP 3 170 634 B1**
(45) Date of publication and mention of the grant of the patent: **04.08.2021**
(21) Application number: 16191943.6
(22) Date of filing: 30.09.2016
(51) Int. Cl.: B27B 5/29, B23D 47/02

(54) **SLIDING COMPOUNDS MITRE SAW**
GEHRUNGSSÄGE
SCIE À ONGLETS

(30) Priority: 19.11.2015 GB 201520416
(43) Date of publication of application: 24.05.2017
(73) Proprietor: Black & Decker Inc., New Britain, CT 06053 (US)
(72) Inventor: Mortaro, Matteo, 06055 Marsciano (DE); Ginochinni, Lucio, 06132 San Sisto (DE); Bettachinni, Marcello, 06073 Ellera di Corciano (DE)
(74) Representative: SBD IPAdmin

(56) References cited:
- EP-A1- 2 689 878
- EP-A1- 2 995 406
- WO-A1-2016/138281
- CN-A- 103 240 461

## Description

The present invention relates to a sliding compound mitre saw according to the preamble of claim 1.

EP2689878 describes a sliding compound mitre saw. Such saws comprise a cutting unit moveably mounted on a base assembly. An electric motor is mounted in the cutting unit which is capable of rotationally driving as cutting blade mounted on a spindle which projects from the cutting unit. A sliding compound mitre saw can perform chop cuts, bevel cuts, mitre cuts and sliding cuts on work pieces located on the base assembly.

The present invention relates to an improvement to such as the sliding compound mitre saw.

EP2689878 discloses a sliding compound mitre saw having all the features in the precharacterising portion of claim 1.

CN103240461 discloses a compound mitre saw having side handles integrally formed in the base assembly.

Accordingly, the present invention provides a sliding compound mitre saw in accordance with claim 1 and a method in accordance with claim 2.

The use of such handles helps an operator in manoeuvring the saw between different locations. Furthermore, as the top surfaces of each handle is flat and lie flush with the top surfaces of the two platforms and rotatable table they extend the work surface formed by the combined surfaces of the platforms and rotatable table.

An embodiment of the present invention will now be described with reference to accompanying drawings of which:
Figure 1 shows a perspective view of a mitre saw;
Figure 2 shows an exploded view of the pivot joint of the mitre saw from a first perspective;
Figure 3 shows an exploded view of the pivot joint from a second perspective;
Figure 4 shows an exploded view of the spring and cup shaped section;
Figure 5 shows a schematic diagram of a cross sectional view of the pivot joint;
Figure 6 shows a side view of the guide rods in the cutting unit;
Figure 7 shows the motor mount with slide bearings;
Figure 8 shows an exploded view of the motor mount with slide bearings;
Figure 9 shows an alternative design for the guide rods;
Figure 10 shows the guide rods of Figure 10;
Figure 11 shows a top view of the side handle;
Figure 12 shows an underside view of the side handle;
Figure 13 shows an exploded view of the side handle; and

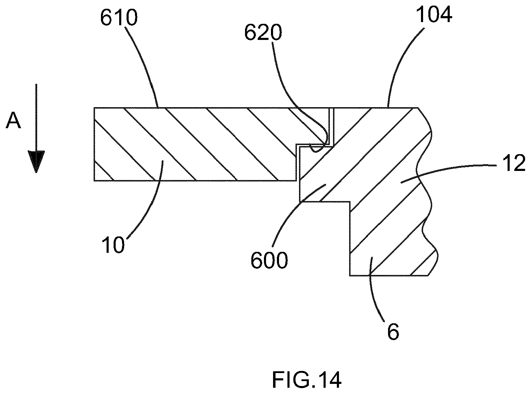

Figure 14 shows a schematic diagram of the handle attached to the base in the direction of Arrows W in Figure 11.

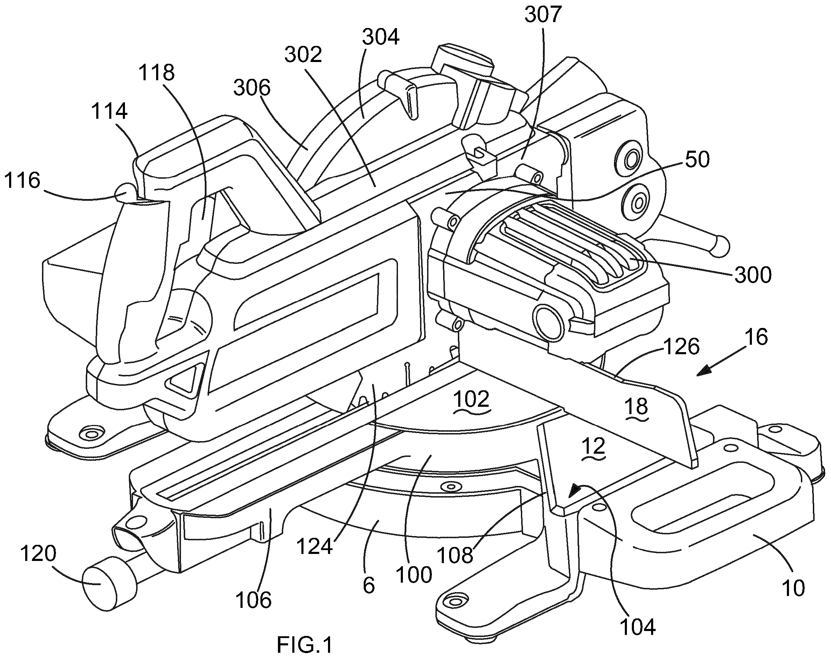

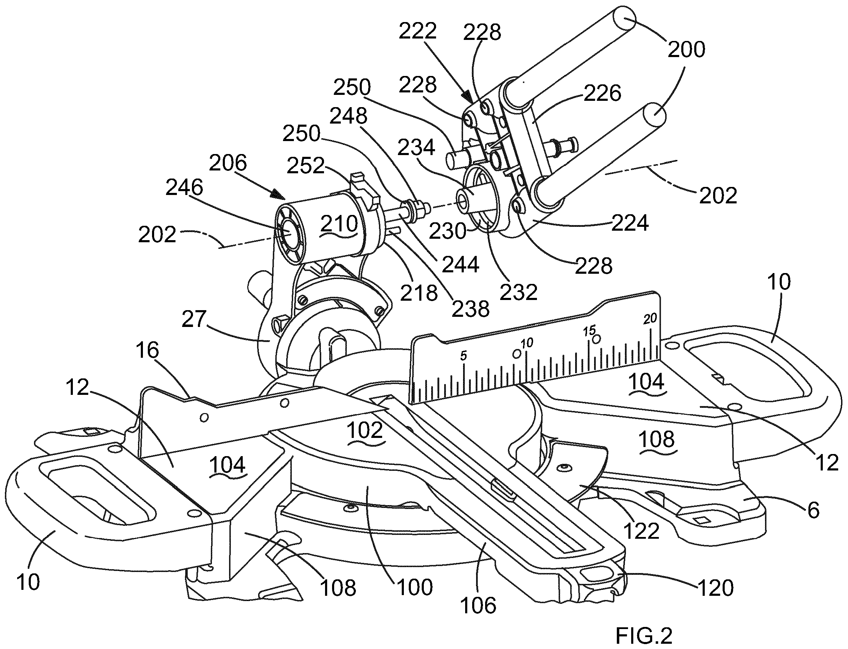

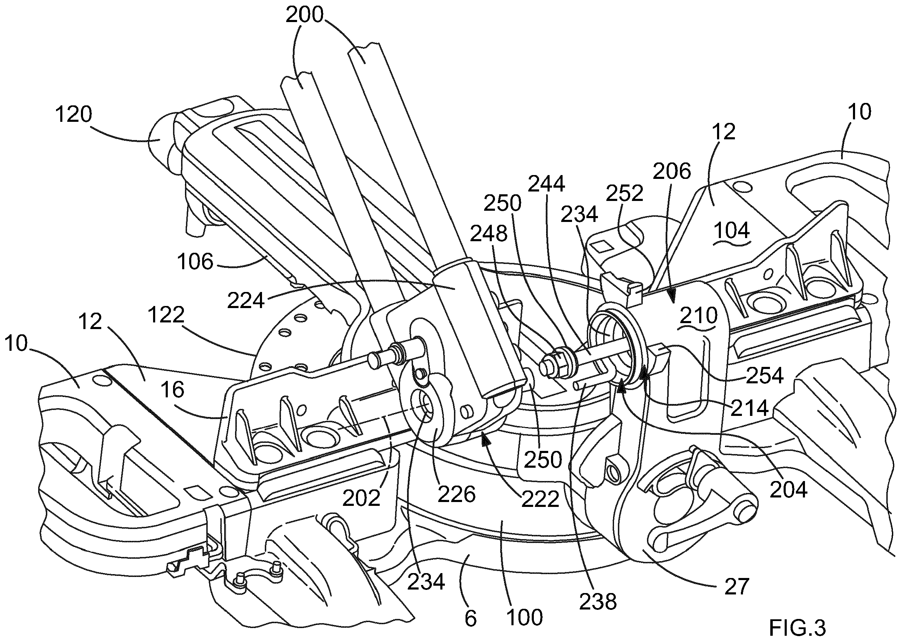

Referring to Figure 1, the mitre saw comprises a base structure 6, 100 comprising a base 6 and a rotatable table 100. The base 6 has two platforms 12 formed symmetrically on either side of the base 6. Rotatably mounted on the base 6 between the two platforms 12 is the rotatable table 100, the top surface 102 of which is flat and lies flush with the flat top surfaces 104 of the two platforms 12. The combined surfaces 102, 104 of the platforms 12 and rotatable table 100 form a work surface. An extension arm 106 is rigidly attached to the rotatable table 100 which extends forward in well-known manner. The rotatable table 100 and extension arm 106 can pivot about a vertical axis through a range of angular positions, the angular movement being restricted by the extension arm 106 engaging with one or other of the sides 108 of the platforms 12. A locking lever 120 can be used to lock the rotatable table 100 and extension arm 106 in desired angular positions. A scale 122 (shown in Figures 2 to 4) is attached to the base 6 to indicate the angular position of the extension arm 106.

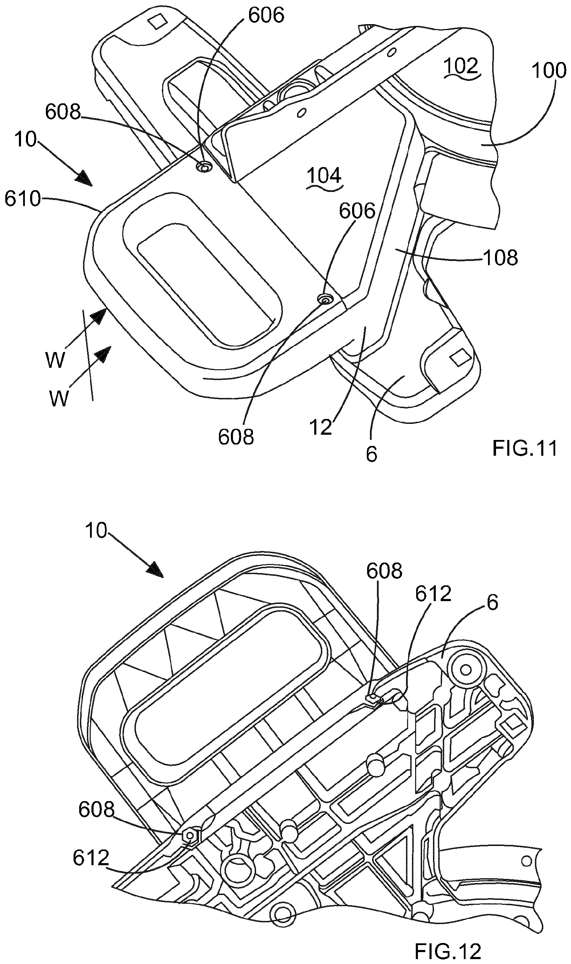

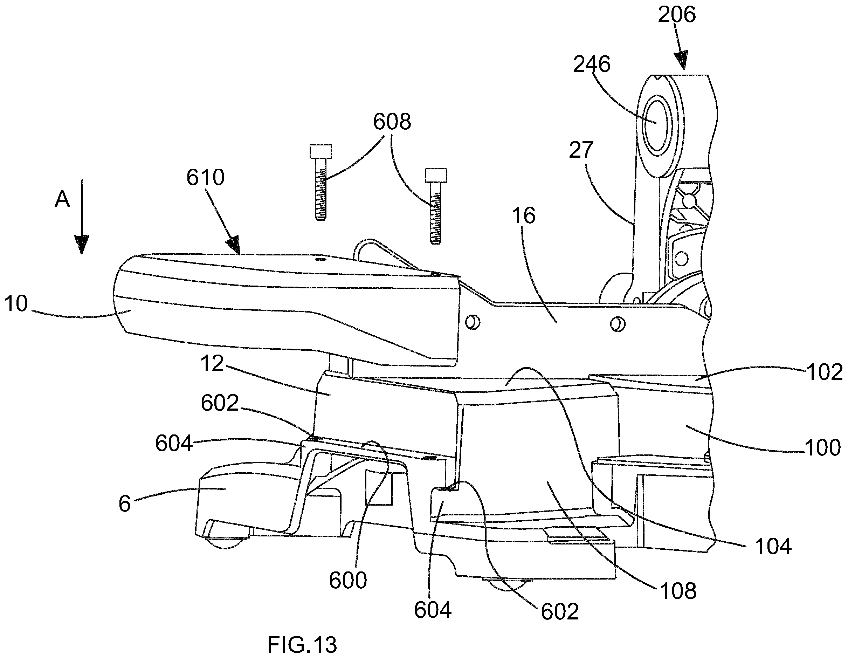

Carrying handles 10 are attached to the sides of the base 6 which will now be described with reference to Figures 11 to 13.

Each handle 10 is a D shaped handle made from plastic. A ledge 600 is formed on each side of the base 6 adjacent the outer side of each platform 12, a part of which faces upwards. Two posts 604 are formed in the base 6 on each side of each ledge 600, each of which comprises an aperture 602 with a threaded section. The threaded section can be provided using a nut 612 as shown or may be integrally formed in the wall of the aperture 602 form in the post 604. Each handle 10 comprises a recess 620 which has corresponding dimensions to those of the ledges 600, a part of which faces downwards. When attaching the handles 10 to the base, each handle 10 is lowered (Arrow A) onto the base 6 from above the base 6. When each handle 10 is mounted on the base 6, each ledge 600 locates within the recess 620 of each handle 10. Two apertures 606 are formed through each handle in corresponding positions to the threaded apertures 602 in the base 6. Bolts 608 are passed through the apertures 606 and screwed into the threaded apertures 602 of the posts 604 to secure each handle 10 to the base 6. The top surfaces 610 of each handle 10 are flat and lie flush with the top surfaces 102, 104 of the two platforms 12 and rotatable table 100. The surfaces 610 of the handle 10 therefore extend the work surface formed by the combined surfaces 610, 102, 104 of the platforms 12 and rotatable table 100.

The handles further help an operator in manoeuvring the saw between different locations.

Pivotally mounted on the rear of the rotatable table 100 is a mount 27 to form a bevel joint. The mount 27 can pivot about a horizontal axis relative to the rotatable table 100 to enable the saw to perform bevel cuts. Two guide rods 200 are pivotally attached to the mount 27 via a pivot joint which is described in more detail below. Slideably mounted on the two guide rods is a cutting unit 50.

The external housing of the cutting unit is constructed from five clam shells 300, 302, 304, 306, 307. The first clam shell 300 forms a motor housing in which is mounted an electric motor (not shown). The first clam shell 300 is attached to the fifth clam shell 307 using bolts. The fifth clam shell 307 forms a motor mount for the electric motor. The fifth clam shell 307 supports the guide mechanism for the two guide rods 200 and supports the cutting unit 50 on the guide rods 200 and which is described in more detail below. The fifth clam shell 307 is made from aluminium which is unlike the four other clam shells 300, 302, 304, 306 which are made from plastic.

The fifth clam shell is attached to the second clam shell 302 using bolts. The second and third clam shells 302, 304 are attached to each other using bolts and which, in addition to the fifth clam shell 307, form a guide rod support housing, in which are slideably mounted the two guide rods 200. The second and third clam shells 302, 304 also form half of the fixed blade guard, which fixed blade guard surrounds the top section of a cutting blade 124 which is mounted on an output spindle 500 of the motor. The fourth clam shell 306 attaches to the third clam shell 304 and forms the second half of the fixed blade guard.

The pivot joint enables the two rods 200 and the cutting unit 50 to pivot about an axis 202 relative to the mount 27 to enable the two rods 200 and the cutting unit 50 to pivot away from or towards the rotatable table 100 and extension arm 106. This enables the saw to perform chop cuts. A spring 204, which forms part of the pivot joint, biases the mount 27 and guide rods to their highest position. A handle 114 is attached to the front of the cutting unit 50 by which a user manoeuvres the cutting unit 50 relative to the base structure. The mount 27 automatically locks in its uppermost pivotal position by a latch mechanism (not shown). A pivotal lever 116 is mounted on the handle 114 by which an operator can release the latch mechanism. A switch 118 is also mounted on the handle 114, the depression of which activates the electric motor.

Rigidly attached on top of the two platforms 12 of the base 6 at the rear of the platforms 12 is a fixed fence 16. The fence 16 extends across the rotatable table 100 but does not interfere with its rotational movement.

The pivot joint will now be described in more detail with reference to Figures 2 to 5.

The mount 27, which is manufactured from aluminium, comprises a curved wall 210 sealed at one end by an end wall 212 to form a cup shaped section 206 enclosing a tubular passage 208 of uniform circular cross section. Formed around the open end cup shaped section 206 are two walls 216, 218 to form a groove 214. An aperture 220 is formed through the centre of the end wall 212.

Rigidly attached to the end of the two guide rods 200 is a base 222 which holds the two guide rods 200 in position. The base 222 comprises two metal clam shells 224, 226 which are clamped around the end of the guide rods 200 and secured to each other and the guide rods using bolts 228.

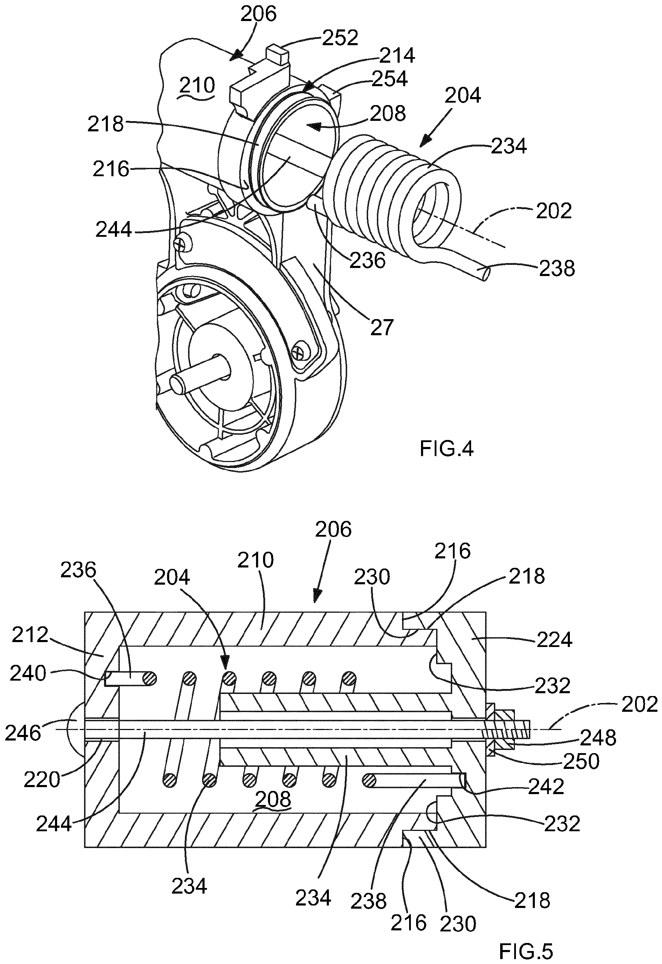

One of the clam shells 224 comprises a circular wall 230 which connects to a circular base 232 formed on the side of the clam shell 224. The size and dimensions of the circular wall 230 are such that it is capable of mating with the groove 214 of the cup shaped section 206 as best seen in Figure 5. When the circular wall 230 is mated with the groove 214 of the cup shaped section 206, the end of the cup shape section 206 abuts against circular base 232.

Extending from the clam shell 224 at the centre of the circular wall 230 and in parallel to the circular wall 230 is an elongate tube 234. When the circular wall 230 is mated with the groove 214 of the cup shaped section 206, the elongate tube 234 extends into the tubular passage 208 as best seen in Figure 5.

The pivot joint comprises the spring 204 which has a central coiled section 234 and two straight ends 236, 238.

When the pivot joint assembled, the circular wall 230 is mated with the groove 214 of the cup shaped section 206. The spring 204 is located inside of the tubular passage 208 with the coiled section surrounding the elongate tube 234. One of the straight ends 236 locates within a recess 240 formed in the end wall 212 of the cup shaped section 206 to attach it to the cup shaped section 206. The other straight end 238 locates in a second recess 242 formed in the clam shell 224 inside of the circular base 232 to attach it to the clam shell 224. A bolt 244 is passed through the aperture 220 in the end wall 212 and through the elongate tube 234. The head 246 of the bolt 244 locates against the outside of the end wall 212. A nut 248 and a washer 250 are screwed on the free end the bolt 244 and abut against the end of the elongate tube as best seen in Figure 5. The bolt 244 secures the cup shaped section 206 to the circular wall 230 with the circular wall 230 mated with the groove 214 of the cup shaped section 206. When the bolt 244 secures the cup shaped section to the circular wall 230, the clam shell 224 in combination with the cup shaped section 206 form a sealed enclosed space 208 in which the spring 204 is located. The longitudinal axis of the bolt 244 is co-axial with the axis 202 of rotation.

The base 222 can pivot on the mount 27 about axis 202 by the circular wall 230 rotating around the groove 214 whilst remaining mated to it. As the base 222 pivots on the mount 27, the cup shape section 206 and/or the circular wall 230 rotates around the bolt 244. The base 222 is pivotally supported on the mount 27 by the engagement of circular wall 230 and the groove 214. As the circular wall 230 rotates within the groove 214, one straight end 236 of the spring 204 rotates relative to the other end 238, storing a spring force in the coiled section 234. The spring 204 applies a biasing force between the cup shaped section 206 and the clam shell 224. The spring 204 is arranged to urge the two guide rods 200 to urge them to point upwardly and move the cutting unit 50 to its highest position. The angular movement of the base 222 on the mount 27 is limited by a projection 250 on the base 222 travelling between two end stops 252, 254 as the base 222 pivots on the mount 27. The spring 204 remains under tension regardless of the relative angular positions of the base 222 and the mount 27.

The guide mechanism for the guide rods 200 will now be described.

Formed in the top section of the fifth clam shell 307 are two brackets 502 which each have straight bracket passages 504 which are tubular formed through them. The two bracket passages 504 are of equal dimensions. Both bracket passages 504 are circular in cross section along the length of the bracket passages 504 and have a constant diameter along the length of the bracket passages 504. The two bracket passages 504 are aligned so that their longitudinal axes 512 are co-axial. Press fitted into and held within each of the bracket passages is a slide bearing 506. Slide bearings are well known in the art and therefore their particular construction is not discussed in any detail. However, any suitable commercial slide bearing can be utilised.

Formed in the lower section of the fifth clam shell 307 is a third bracket 508 which has a straight third bracket passage 510, which is tubular, formed through it. The third bracket 508, together with the third bracket passage 510 extends the full length of the fifth clam shell 307. The third bracket passage 510 is circular in cross-section along the length of the third bracket passage 504 and has a constant diameter along the length of the third bracket passage 510. The longitudinal axis 514 of the third bracket passage 510 is parallel the longitudinal axes 512 of the first two bracket passages 502.

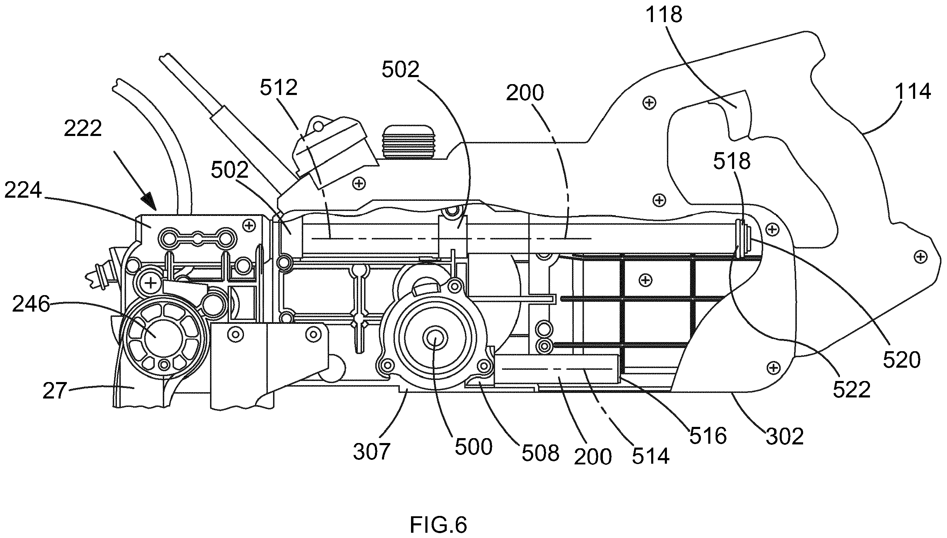

Both guide rods 200 are circular in cross section and of equal uniform diameter along their lengths. The size of the outer diameter of the two guide rods 200 corresponds to that of the inner diameter of the slide bearings 506 so that the upper rod 200 locates in a congruent manner within and is capable of sliding within the two slide bearings 506 as shown in Figure 6. The longitudinal axis of the upper rod 200 is co-axial with that that first two brackets passages 504. The size of the inner diameter of the third bracket passage 508 is slightly larger to that of outer diameter of the two guide rods so that the lower rod 200 locates within and is capable of being guided by the third slide bearing 508.

The weight of cutting unit 50 is supported by the upper guide rod 200 and the siding movement of the motor unit 50 is controlled by the upper guide rod 200 sliding within the two slide bearings 506. The lower guide rod 200 assists in guiding the cutting unit 50 as it slides along the guide rods 200 to prevent any rotational movement of the cutting unit 50 around the longitudinal axis 512 of the upper the guide rod 200.

The top guide rod 200 (as shown in Figure 6) is longer than the bottom guide rod 200. The end of the lower guide rod 200 is sealed with a cap 516 which clips onto the end of the lower guide rod 200.A radially extending washer 518 of greater diameter than the upper guide rod is attached to the end of the upper guide rod 200 using a bolt 520. A resiliently compressible rubber ring 522 is mounted on the end of the upper guide rod 200 adjacent the washer 518. The rubber ring 522 and washer provide an end stop to limit the amount of sliding movement of the cutting unit 50 along the two guide rods away from the base 22. As the cutting unit 50 is slide along the guide rods 200 away from the base, the rubber ring 522 encounters the side of the bracket 502 preventing further movement as the rubber ring cannot pass through the slide bearing 506 and therefore becomes sandwiched between the side of the bracket 502 and the washer 518. The rubber ring 522 provides a dampener to the impact of the side of the bracket 502 engaging the end stop formed by the washer 518 and rubber ring 522 of the upper guide rod 200, preventing damage to any of the components.

As can be seen in Figure 6, the spindle 500 of the motor projects between the two guide rods 200, the motor being located on one side of the guide rods and the cutting blade 124 on the other side.

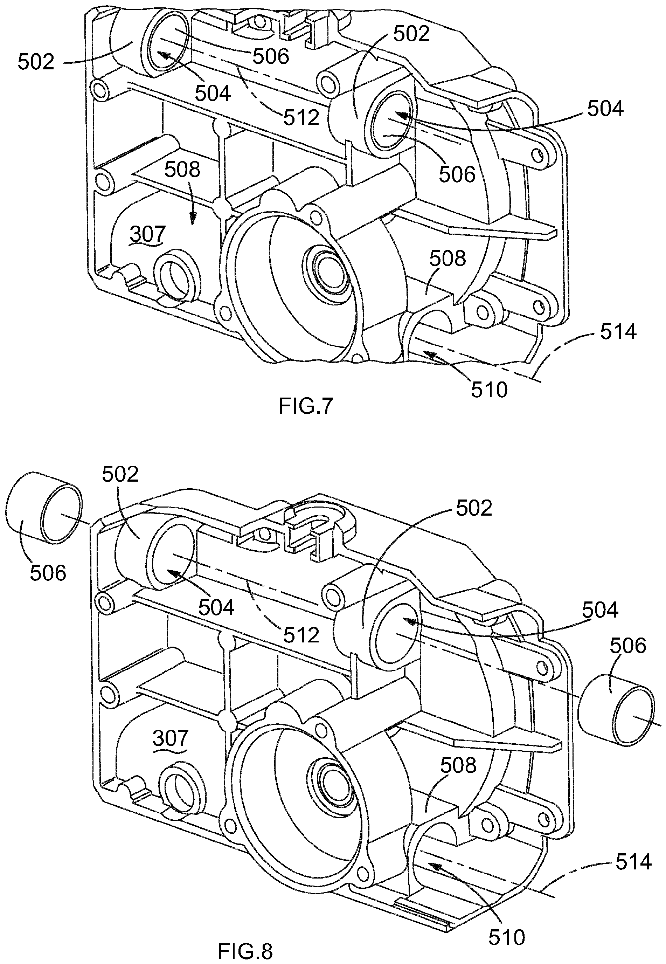

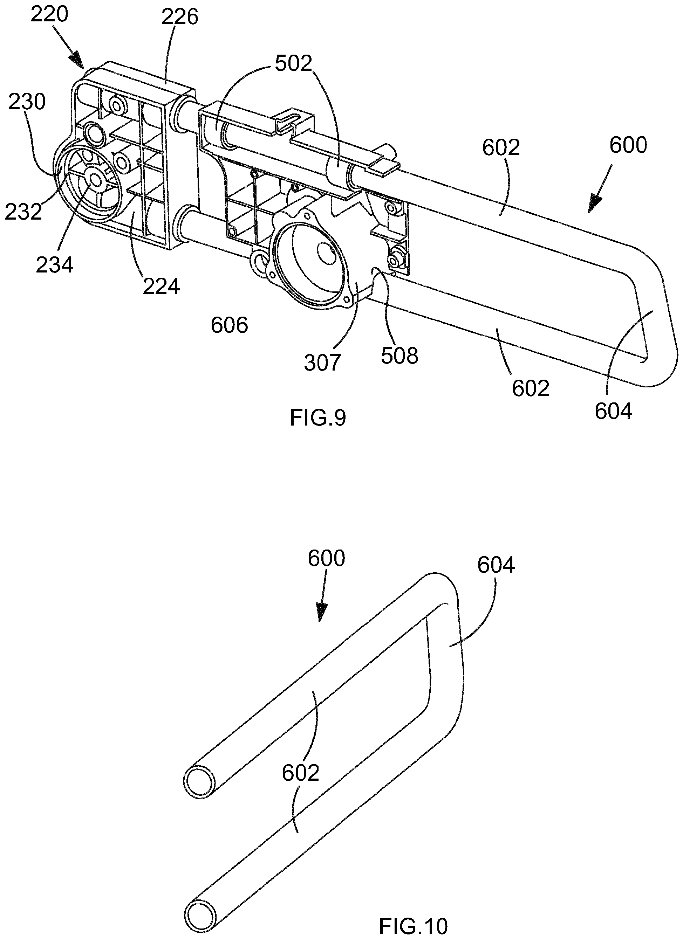

Referring to Figures 9 and 10, an alternative design of guide rods is shown. Where the same features are used in relation to Figures 1 to 8 are present in Figures 9 and 10, the same reference numbers have been used.

The two guide rods 200 of Figures 1 to 8 have been replaced by a single guide rod 600 which has been bent to form a U shape having two parallel straight sides 602 joined together by a perpendicular connecting section 604. The parallel sides act in the same manner as the two guide rods as described previously with the cutting unit 50 sliding along the parallel sides 602. The two frees ends of the parallel straight sides (602) of the guide rod 600 are rigidly clamped in the same manner in the base 222. However, as the two parallel sides 602 are connected by a connecting section 604, there is now no need for a separate end stop to limit the movement of the cutting unit away from the base 222 as the connecting section forms an end stop which engages the cutting unit (50) when the cutting unit (50) is slid along the guide rods away from the base 222. Whilst the connecting section can engage any part of the cutting unit to act as an end stop, the connecting section ideally engages the side of one of the brackets when acting as an end stop. Furthermore, as the length of the two parallel sides are the same, the length of the third bracket 508, together with the third bracket passage 510, does not need to extend the full length of the fifth clam shell 307, thus allowing a part 606 of the fifth clam shell 507 to be removed, exposing the guide rail. This allows less aluminium to be used in the manufacture of the fifth clam shell 307.

## Claims

1. A sliding compound mitre saw comprising:
a base (6);
a rotatable table (100) pivotally mounted within the base (6) to enable the saw to perform mitre cuts, the base (6) and rotatable table (100) forming a base assembly with the top surfaces (102, 104) of the base (6) and the rotatable table (100) forming a work surface;
a mount (27) pivotally mounted on the rear of the rotatable table (100) to enable the saw to perform bevel cuts;
a second base (222) pivotally mounted on the mount (27) to enable the saw to perform chop cuts;
two parallel guide rods (200) rigidly attached to the second base (222) and which extend across the base assembly (6, 100), one guide rod (200) being located above the other guide rod (200);
a cutting unit (50) slideably mounted on the two guide rods (200) which is capable of being slid along the length of the guide rods (200) over the base assembly (6, 100) to enable the saw to perform sliding cuts;
**characterised in that** a handle (10) is mounted to each side of the base (6), the top surfaces (610) of which are flat and flush with the top surfaces (102, 104) of the base (6) and the rotatable table (100) to extend the work surface (102,104);
wherein each side of the base (6) comprises a receiving section (600) which faces at least in an upward direction;
the underside of each handle (10) comprising a mating portion (620) which faces at least in a downward direction for engaging with a corresponding receiving section (600);
wherein the sliding compound mitre saw is configured such that each handle (10) is mounted on the base (6) by being lowered (Arrow A) from above the base (6) onto the base (6) so that the receiving section (600) engages with the mating portion (620), each handle (10) being secured to the base (6) with at least one fastener (608) when mounted on the base (6).

2. A method of manufacturing a sliding compound mitre saw comprising:
a base (6);
a rotatable table (100) pivotally mounted within the base (6) to enable the saw to perform mitre cuts, the base (6) and rotatable table (100) forming a base assembly with the top surfaces (102, 104) of the base (6) and the rotatable table (100) forming a work surface;
a mount (27) pivotally mounted on the rear of the rotatable table (100) to enable the saw to perform bevel cuts;
a second base (222) pivotally mounted on the mount (27) to enable the saw to perform chop cuts;
two parallel guide rods (200) rigidly attached to the second base (222) and which extend across the base assembly (6, 100), one guide rod (200) being located above the other guide rod (200);
a cutting unit (50) slideably mounted on the two guide rods (200) which is capable of being slid along the length of the guide rods (200) over the base assembly (6, 100) to enable the saw to perform sliding cuts;
**characterised in that** a handle (10) is mounted to each side of the base (6), the top surfaces (610) of which are flat and flush with the top surfaces (102, 104) of the base (6) and the rotatable table (100) to extend the work surface;
wherein each side of the base (6) comprises a receiving section (600) which faces at least in an upward direction;
the underside of each handle (10) comprising a mating portion (620) which faces at least in a downward direction for engaging with a corresponding receiving section (600);
wherein the method comprises the steps of:
1) lowering each handle (10) (Arrow A) from above the base (6) onto the base (6) so that the receiving section engages with the mating portion to mount each handle (10) on the base (6); and
2) securing each handle (10) to the base (6) with at least one fastener (608) when mounted on the base (6).

3. A sliding compound mitre saw or method as claimed in either of claims 1 or 2 wherein each of the receiving sections is a ledge (600).

4. A sliding compound mitre saw or method as claimed in any of the previous claims wherein each of the mating portions is a recess (620).

5. A sliding compound mitre saw or method as claimed in any of the previous claims wherein each handle (10) is secured to the base (6) with at least one bolt (608) which passes through the handle (10) and fastens it to the base (6).

6. A sliding compound mitre saw or method as claimed in any of the previous claims wherein each handle (10) is a D shaped handle made from plastic.

## Patentansprüche

1. Gehrungssäge, die umfasst:
eine Basis (6);
einen drehbaren Tisch (100), der schwenkend innerhalb der Basis (6) montiert ist, um es der Säge zu ermöglichen, Gehrungsschnitte auszuführen, wobei die Basis (6) und der drehbare Tisch (100) eine Basisanordnung mit den oberen Oberflächen (102, 104) der Basis (6) bilden, und der drehbare Tisch (100) eine Arbeitsoberfläche bildet;
ein Gestell (27), das schwenkend auf der Rückseite des drehbaren Tischs (100) montiert ist, um es der Säge zu ermöglichen, Schrägschnitte auszuführen;
eine zweite Basis (222), die schwenkend auf dem Gestell (27) montiert ist, um es der Säge zu ermöglichen, Kappschnitte auszuführen;
zwei parallele Führungsstangen (200), die starr an der zweiten Basis (222) angebracht sind, und die sich über der Basisanordnung (6, 100) erstrecken, wobei eine Führungsstange (200) oberhalb der anderen Führungsstange (200) liegt;
eine Schneideinheit (50), die gleitbar auf den zwei Führungsstangen (200) montiert ist, die fähig ist, entlang der Länge der Führungsstangen (200) über der Basisanordnung (6, 100) geschoben zu werden, um es der Säge zu ermöglichen, Gleitschnitte auszuführen;
**dadurch gekennzeichnet, dass** ein Griff (10) auf jeder Seite der Basis (6) montiert ist, deren obere Oberflächen (610) flach und mit den oberen Oberflächen (102, 104) der Basis (6) und dem drehbaren Tisch (100) bündig sind, um die Arbeitsoberfläche (102, 104) zu erweitern;
wobei jede Seite der Basis (6) einen Aufnahmeteilabschnitt (600) umfasst, der mindestens in eine Aufwärtsrichtung gewandt ist;
die Unterseite jedes Griffs (10) einen dazu passenden Abschnitt (620) umfasst, der mindestens in eine Abwärtsrichtung zum Eingreifen in einen entsprechenden Aufnahmeteilabschnitt (600) gewandt ist;
wobei die Gehrungssäge derart konfiguriert ist, dass jeder Griff (10) auf der Basis (6) montiert ist, indem er von oberhalb der Basis (6) auf die Basis (6) derart gesenkt wird (Pfeil A), dass der Aufnahmeteilabschnitt (600) in den dazu passenden Abschnitt (620) eingreift, wobei jeder Griff (10) an der Basis (6) mit mindestens einem Befestigungselement (608) befestigt ist, wenn er auf die Basis (6) montiert wird.

2. Verfahren zum Herstellen einer Gehrungssäge, die umfasst:
eine Basis (6);
einen drehbaren Tisch (100), der schwenkend innerhalb der Basis (6) montiert ist, um es der Säge zu ermöglichen, Gehrungsschnitte auszuführen, wobei die Basis (6) und der drehbare Tisch (100) eine Basisanordnung bilden, wobei die oberen Oberflächen (102, 104) der Basis (6) und der drehbare Tisch (100) eine Arbeitsoberfläche bilden;
ein Gestell (27), das schwenkend auf der Rückseite des drehbaren Tischs (100) montiert ist, um es der Säge zu ermöglichen, Schrägschnitte auszuführen;
eine zweite Basis (222), die schwenkend auf dem Gestell (27) montiert ist, um es der Säge zu ermöglichen, Kappschnitte auszuführen;
zwei parallele Führungsstangen (200), die starr an der zweiten Basis (222) angebracht sind und sich über der Basisanordnung (6, 100) erstrecken, wobei eine Führungsstange (200) oberhalb der anderen Führungsstange (200) liegt;
eine Schneideinheit (50), die gleitbar auf den zwei Führungsstangen (200) montiert ist, die fähig ist, entlang der Länge der Führungsstangen (200) über der Basisanordnung (6, 100) geschoben zu werden, um es der Säge zu ermöglichen, Gleitschnitte auszuführen;
**dadurch gekennzeichnet, dass** der Griff (10) auf jeder Seite der Basis (6) montiert ist, deren obere Oberflächen (610) flach und mit den oberen Oberflächen (102, 104) der Basis (6) und dem drehbaren Tisch (100) bündig sind, um die Arbeitsoberfläche zu erweitern;
wobei jede Seite der Basis (6) einen Aufnahmeteilabschnitt (600) umfasst, der mindestens in eine Aufwärtsrichtung gewandt ist;
wobei die Unterseite jedes Griffs (10) einen dazu passenden Abschnitt (620) umfasst, der mindestens in eine Abwärtsrichtung gewandt ist, um in einen entsprechenden Aufnahmeteilabschnitt (600) einzugreifen;
wobei das Verfahren die Schritte umfasst des:
1) Senkens jedes Griffs (10) (Pfeil A) von oberhalb der Basis (6) auf die Basis (6) derart, dass der Aufnahmeteilabschnitt in den dazu passenden Abschnitt eingreift, um jeden Griff (10) auf der Basis (6) zu montieren; und
2) das Sichern jedes Griffs (10) an der Basis (6) mit mindestens einem Befestigungselement (608), wenn er auf die Basis (6) montiert wird.

3. Gehrungssäge oder Verfahren nach einem der Ansprüche 1 oder 2, wobei jeder der Aufnahmeteilabschnitte eine Leiste (600) ist.

4. Gehrungssäge oder Verfahren nach einem der vorstehenden Ansprüche, wobei jeder der dazu passenden Abschnitte eine Vertiefung (620) ist.

5. Gehrungssäge oder Verfahren nach einem der vorstehenden Ansprüche, wobei jeder Griff (10) an der Basis (6) mit mindestens einem Bolzen (608) gesichert ist, der durch den Griff (10) durchgeht und ihn an der Basis (6) befestigt.

6. Gehrungssäge oder Verfahren nach einem der vorstehenden Ansprüche, wobei jeder Griff (10) ein D-förmiger Griff ist, der aus Kunststoff hergestellt ist.

## Revendications

1. Scie coulissante à onglets mixtes comprenant :
une base (6) ;
un plateau tournant (100) monté de façon pivotante à l'intérieur de la base (6) pour permettre à la scie de réaliser des coupes en onglet, la base (6) et le plateau tournant (100) formant un ensemble de base avec les surfaces supérieures (102, 104) de la base (6) et le plateau tournant (100) formant une surface de travail ;
un support de montage (27) monté de façon pivotante à l'arrière du plateau tournant (100) pour permettre à la scie de réaliser des coupes en biseau ;
une seconde base (222) montée de façon pivotante sur le support de montage (27) pour permettre à la scie de réaliser des coupes en tronçon ;
deux tiges de guidage (200) parallèles fixées de manière rigide à la seconde base (222) et qui s'étendent à travers l'ensemble de base (6, 100), une tige de guidage (200) étant située au-dessus de l'autre tige de guidage (200) ;
une unité de découpe (50) montée de manière coulissante sut les deux tiges de guidage (200) qu'il est possible de faire glisser le long de la longueur des tiges de guidage (200) sur l'ensemble de base (6, 100) pour permettre à la scie de réaliser des coupes coulissantes ;
**caractérisée en ce qu'**une poignée (10) est montée de chaque côté de la base (6), les surfaces supérieures (610) de celle-ci sont plates et affleurantes aux surfaces supérieures (102, 104) de la base (6) et au plateau tournant (100) pour étendre la surface de travail (102, 104) ;
dans laquelle chaque côté de la base (6) comprend une section de réception (600) qui est orientée au moins vers le haut ;
le dessous de chaque poignée (10) comprenant une partie d'accouplement (620) qui est orientée au moins vers le bas pour s'engager dans une partie de réception (600) correspondante ;
dans laquelle la scie coulissante à onglets mixtes est configurée de sorte que chaque poignée (10) soit montée sur la base (6) en étant abaissée (Flèche A) du dessus de la base (6) sur la base (6) de sorte que la section de réception (600) s'engage avec la partie d'accouplement (620), chaque poignée (10) étant fixée à la base (6) avec au moins une fixation (608) lorsqu'elle est montée sur la base (6).

2. Procédé de fabrication d'une scie coulissante à onglets mixtes comprenant :
une base (6) ;
un plateau tournant (100) monté de façon pivotante à l'intérieur de la base (6) pour permettre à la scie de réaliser des coupes en onglet, la base (6) et le plateau tournant (100) formant un ensemble de base avec les surfaces supérieures (102, 104) de la base (6) et le plateau tournant (100) formant une surface de travail ;
un support de montage (27) monté de façon pivotante à l'arrière du plateau tournant (100) pour permettre à la scie de réaliser des coupes en biseau ;
une seconde base (222) montée de façon pivotante sur le support de montage (27) pour permettre à la scie de réaliser des coupes en tronçon ;
deux tiges de guidage (200) parallèles fixées de manière rigide à la seconde base (222) et qui s'étendent à travers l'ensemble de base (6, 100), une tige de guidage (200) étant située au-dessus de l'autre tige de guidage (200) ;
une unité de découpe (50) montée de manière coulissante sut les deux tiges de guidage (200) qu'il est possible de faire glisser le long de la longueur des tiges de guidage (200) sur l'ensemble de base (6, 100) pour permettre à la scie de réaliser des coupes coulissantes ;
**caractérisée en ce qu'**une poignée (10) est montée de chaque côté de la base (6), les surfaces supérieures (610) de celle-ci sont plates et affleurantes aux surfaces supérieures (102, 104) de la base (6) et au plateau tournant (100) pour étendre la surface de travail (102, 104) ;
dans laquelle chaque côté de la base (6) comprend une section de réception (600) qui est orientée au moins vers le haut ;
le dessous de chaque poignée (10) comprenant une partie d'accouplement (620) qui est orientée au moins vers le bas pour s'engager dans une partie de réception (600) correspondante ;
dans laquelle le procédé comprend les étapes de :
a) abaissement de chaque poignée (10) (Flèche A) du dessus de la base (6) sur la base (6) de manière à ce que la section de réception s'engage avec la partie d'accouplement pour monter chaque poignée (10) sur la base (6) ; et
b) fixation de chaque poignée (10) sur la base (6) avec au moins une fixation (608) lorsqu'elle est montée sur la base (6).

3. Scie coulissante à onglets mixtes ou procédé selon les revendications 1 ou 2 dans lesquels chacune des sections de réception est un rebord (600).

4. Scie coulissante à onglets mixtes ou procédé selon l'une quelconque des revendications précédentes dans lesquels chacune des parties d'accouplement est une cavité (620).

5. Scie coulissante à onglets mixtes ou procédé selon l'une quelconque des revendications précédentes dans lesquels chaque poignée (10) est fixée sur la base (6) avec au moins un boulon (608) qui passe à travers la poignée (10) et la maintient sur la base (6).

6. Scie coulissante à onglets mixtes ou procédé selon l'une quelconque des revendications précédentes dans lesquels chaque poignée (10) est une poignée en forme de D conçue en plastique.
